# EUROPÄISCHE PATENTSCHRIFT

(11) **EP 3 121 066 B1**
(45) Veröffentlichungstag und Bekanntmachung des Hinweises auf die Patenterteilung: **12.09.2018**
(21) Anmeldenummer: 16001617.6
(22) Anmeldetag: 22.07.2016
(51) Int. Cl.: B60R 16/08, B32B 1/08

(54) **LEITUNGSANORDNUNG FÜR EIN KRAFTFAHRZEUG MIT ZUMINDEST EINER ALS TEXTILSCHLAUCH AUSGEBILDETEN LEITUNG**
HOSE ASSEMBLY FOR A MOTOR VEHICLE HAVING AT LEAST ONE CONDUIT IN THE FORM OF A TEXTILE LAYER
SYSTEME DE TUYAU DE VEHICULE AUTOMOBILE COMPRENANT AU MOINS UNE CONDUITE CONÇUE EN TANT QUE FLEXIBLE EN TEXTILE

(30) Priorität: 24.07.2015 AT 4962015
(43) Veröffentlichungstag der Anmeldung: 25.01.2017
(73) Patentinhaber: MAN Truck & Bus Österreich GesmbH, 4400 Steyr (AT)
(72) Erfinder: Raab, Gottfried, 4320 Perg (AT); Klammer, Josef, 4400 Steyr (AT); Robausch, Stefan, 4400 St. Ulrich bei Steyr (AT)
(74) Vertreter: v. Bezold & Partner Patentanwälte - PartG mbB

(56) Entgegenhaltungen:
- EP-A1- 1 437 264
- EP-A1- 2 312 035
- EP-A1- 2 476 548
- WO-A1-2011/012374
- AT-B- 208 161
- JP-A- S5 440 329
- US-A1- 2006 182 914

## Beschreibung

Die Erfindung betrifft eine Leitungsanordnung für ein Kraftfahrzeug, vorzugsweise ein Nutzfahrzeug, insbesondere einen Lastkraftwagen oder einen Omnibus. Die Leitungsanordnung ist in einem Abwärmenutzungssystem zur zweckmäßigen Umwandlung von Abwärme einer Verbrennungskraftmaschine in nutzbare Energie ausgeführt.

Bei Kraftfahrzeugen müssen oftmals Medien, zum Teil auch entzündliche Medien, bei beengten Platzverhältnissen an im Betrieb heißen Verbrennungskraftmaschinen vorbeigeführt werden. In Systemen zur Abwärmenutzung (Waste Heat Recovery = WHR) von Verbrennungskraftmaschinen kommen unter anderem Dampfkreisprozesse (z. B. Clausius-Rankine-Cycle = CRC, Organic-Rankine-Cycle = ORC, etc.) zur Anwendung. Dabei wird ein Kreislaufmedium in einer Speisepumpe auf ein hohes Druckniveau gebracht und in einem Verdampfer verdampft und überhitzt. Der Dampf wird anschließend einer Expansionsmaschine zugeführt, die im Dampf gespeicherte Energie in mechanische Arbeit umwandelt. Nach der Expansionsmaschine wird der entspannte Dampf in einem Kondensator verflüssigt und wieder der Speisepumpe zugeführt. Hierzu verwendete Leitungsanordnungen nutzen, abhängig vom Arbeitsmedium, üblicherweise starre Edelstahlrohre mit z. B. Schneidringverschraubungen. Alternativ können in Bereichen mit niedriger Temperatur auch Hochdruckschläuche mit geeigneten Verschraubungen verwendet werden. Edelstahlleitungen weisen insbesondere den Nachteil auf, dass sie einerseits intensiv sind hinsichtlich Materialkosten, Gewicht und in den Herstellkosten (z. B. räumliches Biegen der Leitungskontur). Andererseits müssen teure Zusatzelemente verbaut werden, wie z. B. Kompensatoren zur schwingungstechnischen Entkopplung und Edelstahl-Schneidringverschraubungen zur Verbindung der Edelstahlrohre. Hochdruckschläuche aus dem Hydraulikbereich weisen insbesondere den Nachteil der Unbeständigkeit gegenüber einigen ORC-Medien auf und darüber hinaus ein hohes Gewicht. Zusätzlich sind sie kostenintensiv und wenig flexibel aufgrund des inneren Aufbaus, insbesondere geflochtener Drahteinlagen.

Eine Aufgabe der Erfindung ist es, eine Möglichkeit zur Überwindung vorstehend genannter Nachteile zu schaffen und alternativ oder ergänzend eine Leitungsanordnung mit verbesserter Funktionalität, insbesondere in Bezug auf thermodynamische und/oder sicherheitstechnische Aspekte.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Abwärmenutzungssystem mit einer Leitungsanordnung für ein Kraftfahrzeug. Das Kraftfahrzeug ist vorzugsweise ein Nutzfahrzeug, insbesondere ein Lastkraftwagen oder ein Omnibus. Das Abwärmenutzungssystem kann z. B. auf der CRC-Technik (Clausius-Rankine-Cycle = CRC) oder der ORC-Technik (Organic-Rankine-Cycle = ORC) basieren.

Die Leitungsanordnung umfasst eine oder mehrere Leitungen zum Führen eines fluiden Mediums, wobei zumindest eine Leitung zumindest einen Textilschlauch umfasst oder als zumindest ein Textilschlauch ausgeführt ist und der Textilschlauch eine Textilstruktur und einen Innenmantel aufweist, wobei der Textilschlauch eine Innenleitung umhüllt und die Innenleitung zum Führen des fluiden Mediums dient. Der innere Textilschlauch und der äußere Textilschlauch sind zweckmäßig wie hierin offenbart ausbildbar. Die nachfolgende Beschreibung gilt somit zweckmäßig für einen Textilschlauch allgemein sowie einen inneren Textilschlauch und einen äußeren Textilschlauch. Der Textilschlauch erstreckt sich über vorzugsweise die gesamte Länge der Leitung, zweckmäßig gegebenenfalls mit Ausnahme einer oder mehrerer Schnittstelleneinrichtungen.

Die eingangs erwähnten Leitungen, insbesondere Edelstahlleitungen und/oder Hydraulikschläuche, können im Rahmen der Erfindung durch Textilschläuche ersetzt oder umhüllt werden.

Der Innenmantel des Textilschlauchs kann insbesondere auch als Seele bezeichnet werden. Es ist möglich, dass die Textilstruktur eine Textilwebstruktur ist.

Der Innenmantel ist aus einem vorzugsweise mediumbeständigen und/oder dichten, insbesondere mediumundurchlässigen, Elastomer ausgebildet.

Der Innenmantel ist insbesondere ausgeführt, um die Dichtheit des Textilschlauchs zu gewährleisten und/oder das Medium zu führen.

Die Textilstruktur hingegen dient vorzugsweise zur Aufnahme der Kräfte des Drucks des Mediums.

Es ist möglich, dass der Textilschlauch formlabil ausgeführt ist und somit im Wesentlichen keine Formstabilität aufweist.

Es ist ebenfalls möglich, dass der Textilschlauch formstabil ausgeführt ist. Hierzu kann der Textilschlauch z. B. eine Spirale aufweisen, so dass die Spirale zweckmäßig zur Formstabilitätserzielung dient.

Es ist möglich, dass die Spirale in den Textilschlauch eingewebt ist, insbesondere in die Textilstruktur.

Die Spirale ist vorzugsweise eine Kunststoffspirale. Der Textilschlauch umhüllt eine Innenleitung, z. B. eine Edelstahlleitung, und/oder einen Hydraulikschlauch, und die Innenleitung dient zum Führen des fluiden Mediums, so dass zweckmäßig im normalen Betriebszustand der Textilschlauch mit dem Medium nicht in Kontakt kommt. Der Textilschlauch kann allerdings im Leckagefall der Innenleitung (z. B. Undichtheit, Platzer, etc.) dafür sorgen, dass das Medium aus der Innenleitung zurückgehalten und/oder an einen vorbestimmten, insbesondere unkritischen, Ort geführt wird. Die Innenleitung kann allerdings auch als zweckmäßig wie hierin offenbarter Textilschlauch ausgeführt sein, so dass zweckmäßig im normalen Betriebszustand der äußere Textilschlauch mit dem Medium nicht in Kontakt kommt. Der äußere Textilschlauch kann allerdings im Leckagefall der ebenfalls als Textilschlauch ausgebildeten Innenleitung (z. B. Undichtheit, Platzer, etc.) dafür sorgen, dass das Medium aus der als Textilschlauch ausgebildeten Innenleitung zurückgehalten und/oder an einen vorbestimmten, insbesondere unkritischen, Ort geführt wird.

Daraus ergibt sich nochmals, dass im Rahmen der Erfindung der Textilschlauch, insbesondere dessen Innenmantel, im normalen Betriebszustand mit dem fluiden Medium nicht zwangsläufig in Kontakt kommen muss, sondern insbesondere nur dann, wenn die Innenleitung leckt, z. B. eine Undichtheit aufweist oder platzt. Der Textilschlauch kann dann zweckmäßig dafür sorgen, dass das Medium zurückgehalten und an einen sicheren bzw. unkritischen Ort geführt wird.

Es ist möglich, dass der Textilschlauch mit Isolierungsmaterial versehen ist, das sich vorzugsweise über die im Wesentlichen gesamte Textilschlauchlänge erstrecken kann und/oder das innenseitig des Innenmantels angeordnet sein kann.

Es ist möglich, dass das Isoliermaterial zweckmäßig zwischen dem Innenmantel und der Innenleitung (z. B. einer Edelstahlleitung oder einem Hydraulikschlauch), angeordnet ist, so dass es zweckmäßig den Bereich zwischen dem Innenmantel und der Innenleitung ausfüllt. Das Isoliermaterial könnte sich auch zwischen dem inneren Textilschlauch und dem äußeren Textilschlauch erstrecken.

Die Leitungsanordnung ist in einem Abwärmenutzungssystem zur Umwandlung von Abwärme einer Verbrennungskraftmaschine in nutzbare Energie, insbesondere mittels eines Dampfkreislaufs, ausgeführt.

Es ist möglich, dass ein Textilschlauch zur zweckmäßig fluiden Verbindung eines Verdampfers und einer Expansionsmaschine, z. B. ein Expander, dient. Hierzu kann insbesondere ein eine Innenleitung (z. B. ein Textilschlauch, eine Edelstahlleitung und/oder ein Hydraulikschlauch) umhüllender Textilschlauch mit dazwischen angeordnetem Isoliermaterial verwendet werden.

Es ist ebenfalls möglich, dass ein Textilschlauch zur zweckmäßig fluiden Verbindung einer Expansionsmaschine und eines Kondensators verwendet wird. Hierzu kann insbesondere ein vorzugsweise formstabiler Textilschlauch genutzt werden. Ebenfalls kann hierzu ein eine Innenleitung (z. B. ein Textilschlauch, eine Edelstahlleitung und/oder einen Hydraulikschlauch) umhüllender Textilschlauch verwendet werden.

Es ist möglich, dass ein Textilschlauch zur zweckmäßig fluiden Verbindung eines Kondensators und einer Fördereinrichtung, z. B. einer Pumpe, insbesondere einer Speisepumpe, zum Fördern des fluiden Mediums dient. Erfindungsgemäß ist vorgesehen, dass der Textilschlauch eine Innenleitung (z. B. ein Textilschlauch, eine Edelstahlleitung und/oder einen Hydraulikschlauch) umhüllt und die Innenleitung zum Führen des fluiden Mediums dient.

Es ist möglich, dass ein Textilschlauch zur zweckmäßig fluiden Verbindung einer Fördereinrichtung, z. B. einer Pumpe, insbesondere einer Speisepumpe, zum Fördern des fluiden Mediums und einem Verdampfer dient. Erfindungsgemäß umhüllt der Textilschlauch eine Innenleitung
(z. B. ein Textilschlauch, eine Edelstahlleitung und/oder einen Hydraulikschlauch) und die Innenleitung dient zum Führen des fluiden Mediums. Es ist möglich, dass der Textilschlauch eine Verbrennungskraftmaschine (z. B. ein Verbrennungsmotor), einen Abgas-Krümmer und/oder einen Abgas-Turbolader eines Kraftfahrzeugs außenseitig kontaktiert oder zumindest benachbart daran vorbeigeführt ist.

Das fluide Medium umfasst vorzugsweise Dampf und/oder ein entzündliches Medium.

Das Medium kann z. B. Wasser oder Ethanol umfassen oder andere bei der CRC- oder ORC-Technik verwendete Medien.

Der Textilschlauch selbst besteht, zweckmäßig gegebenenfalls mit Ausnahme einer oder mehreren Schnittstelleneinrichtungen, aus der Textilstruktur und dem Innenmantel.

Es ist möglich, dass der Textilschlauch bis zumindest 60 °C, 80 °C, 100 °C, 120 °C, 140°C, 160 °C, 180 °C, 200 °C, 220 °C oder 240 °C temperaturbeständig ist. Alternativ oder ergänzend kann der Textilschlauch bis zumindest 0,7 bar, 1 bar, 4 bar, 8 bar, 16 bar, 32 bar oder 48 bar druckbeständig sein.

Es ist möglich, dass der Textilschlauch, z. B. in seiner Längs- und/oder Radialrichtung, elastisch ausgeführt ist, und sich somit zweckmäßig dehnen und zusammenziehen kann.

Es ist möglich, dass die Leitungsanordnung zumindest zwei Textilschläuche aufweist, wovon zumindest ein Textilschlauch innerhalb des anderen Textilschlauchs verläuft, so dass vorzugsweise der äußere Textilschlauch im Leckagefall des inneren Textilschlauchs dafür sorgt, das Medium zurückzuhalten und/oder an einen vorbestimmten Ort zu führen. Der äußere und der innere Textilschlauch sind zweckmäßig wie hierin offenbart ausbildbar.

Die innere Textilschlauch und der äußere Textilschlauch verlaufen vorzugsweise im Wesentlichen koaxial, so dass zweckmäßig deren Längsachsen im Wesentlichen zusammenfallen.

Üblicherweise entsteht beim Abkühlen des Mediums in der oder den Leitungen ein Unterdruck, durch den Medium aus einem Ausgleichsbehälter nachfließt (zweckmäßig Abstellvorgang). Der Textilschlauch kann deshalb elastisch, z. B. nicht formstabil, ausgebildet sein, so dass er insbesondere durch Unterdruck zusammenziehbar ist, wodurch der Ausgleichsbehälter z. B. kleiner dimensionierbar ist oder sogar entfallen kann. Der Ausgleichsbehälter kann insbesondere im Wesentlichen um den Betrag verkleinert werden, um den der Textilschlauch zusammenziehbar ist.

Zu erwähnen ist, dass die Leitungsanordnung einen oder mehrere Textilschläuche wie hierin offenbart umfassen kann. So kann eine z. B. Edelstahlleitung oder ein Hydraulikschlauch innerhalb eines Textilschlauchs verlaufen, oder ein Textilschlauch innerhalb eines anderen Textilschlauchs verlaufen.

Die Erfindung umfasst ein Abwärmenutzungssystem, für ein Kraftfahrzeug, zur Umwandlung von Abwärme einer Verbrennungskraftmaschine in nutzbare Energie, z. B. mittels eines Dampfkreislaufs, mit einer Leitungsanordnung wie hierin offenbart.

Die Erfindung umfasst ebenfalls ein Kraftfahrzeug mit einem Abwärmenutzungssystem wie hierin offenbart.

Das Kraftfahrzeug ist vorzugsweise ein Nutzfahrzeug, insbesondere ein Lastkraftwagen oder ein Omnibus.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: illustriert eine schematische Querschnittsansicht eines Textilschlauchs für eine Leitungsanordnung gemäß einer Ausführungsform der Erfindung,
- Figur 2: illustriert eine schematische Querschnittsansicht eines eine Innenleitung umhüllenden Textilschlauchs für eine Leitungsanordnung gemäß einer Ausführungsform der Erfindung,
- Figur 3: illustriert eine schematische Querschnittsansicht eines eine Innenleitung umhüllenden Textilschlauchs für eine Leitungsanordnung gemäß einer wiederum anderen Ausführungsform der Erfindung,
- Figur 4: illustriert eine schematische Querschnittsansicht eines eine Innenleitung umhüllenden Textilschlauchs mit dazwischen liegendem Isolierungsmaterial für eine Leitungsanordnung gemäß einer noch anderen Ausführungsform der Erfindung,
- Figur 5: illustriert eine schematische Querschnittsansicht eines eine Innenleitung umhüllenden Textilschlauchs für eine Leitungsanordnung gemäß einer Ausführungsform der Erfindung, und
- Figur 6: illustriert ein Abwärmenutzungssystem für ein Kraftfahrzeug mit einer Leitungsanordnung gemäß einer Ausführungsform der Erfindung.

Die in den Figuren gezeigten Ausführungsformen stimmen teilweise überein, so dass ähnliche oder identische Teile mit den gleichen Bezugszeichen versehen sind und zu deren Erläuterung auch auf die Beschreibung bzw. die Figuren der anderen Ausführungsformen verwiesen wird, um Wiederholungen zu vermeiden.

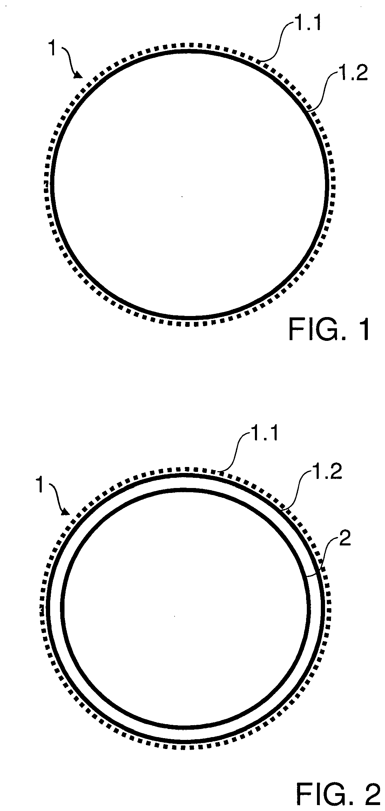

Figur 1 zeigt eine schematische Querschnittsansicht einer als Textilschlauch 1 ausgeführten Leitung zum Führen eines fluiden Mediums. Der Textilschlauch 1 weist eine Textilstruktur 1.1, insbesondere eine Textilwebstruktur, und einen mediumbeständigen Innenmantel 1.2 auf. Die Textilstruktur 1.1 umhüllt den Innenmantel 1.2. Der Innenmantel 1.2 dient zum Führen und somit zum in Kontakt treten mit dem fluiden Medium und ist zweckmäßig ausgeführt, um die Dichtheit des Textilschlauchs 1 zu gewährleisten. Der Innenmantel 1.2 kann hierzu aus einem Elastomer ausgeführt sein. Die Textilstruktur 1.1 hingegen dient zweckmäßig zur Aufnahme der Kräfte des Drucks des fluiden Mediums.

In Figur 1 dient der Textilschlauch 1 selbst, insbesondere dessen Innenmantel 1.1, zum Führen des fluiden Mediums. Eine separate Innenleitung zum Führen des fluiden Mediums, wie z. B. ein Edelstahlrohr oder eine Hydraulikleitung, ist nicht vorhanden.

Figur 2 zeigt eine schematische Querschnittsansicht eines eine Innenleitung 2 umhüllenden Textilschlauchs 1. Der Textilschlauch 1 kann wie in der unter Bezugnahme auf die Figur 1 beschriebenen Ausführungsform aufgebaut sein.

Der Textilschlauch 1 ist formstabil ausgeführt, vorzugsweise mittels einer Spirale, die z. B. als Kunststoffspirale ausgeführt und in die Textilstruktur 1.1 eingewebt sein kann.

Im Gegensatz zu dem in Figur 1 gezeigten Textilschlauch kommt der Textilschlauch 1 in einem normalen Betriebszustand mit dem fluiden Medium nicht in Kontakt, da im normalen Betriebszustand das fluide Medium mittels der Innenleitung 2 geführt wird. Die Innenleitung 2 kann z. B. ein Edelstahlrohr oder ein Hydraulikschlauch zum Führen des fluiden Mediums sein.

Bei der in Figur 2 gezeigten Ausführungsform dient der Textilschlauch 1 insbesondere dazu, bei einer Leckage der Innenleitung 2 (z. B. einem Platzer oder einer anderen Undichtheit), das daraus austretende fluide Medium zu einem sicheren Bereich, insbesondere einem Bereich mit niedrigerer Temperatur, zu führen.

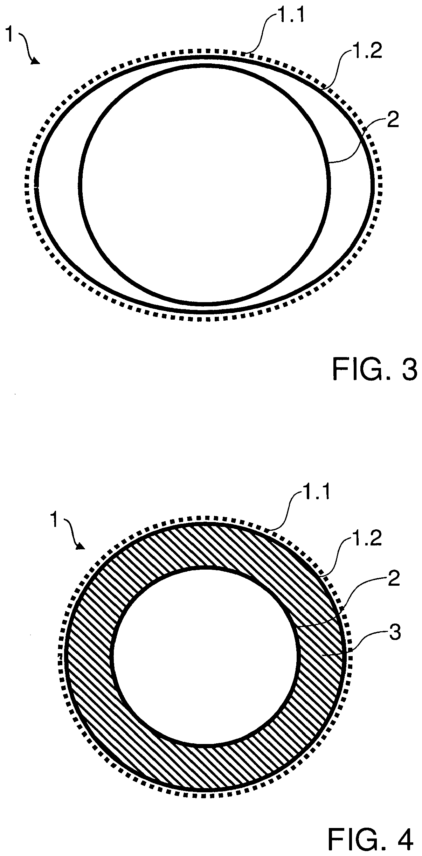

Figur 3 zeigt eine schematische Querschnittsansicht eines eine Innenleitung 2 umhüllenden Textilschlauchs 1. Die in Figur 3 gezeigte Ausführungsform stimmt großteils mit der in Figur 2 gezeigten Ausführungsform überein, wobei in der Figur 3 der Textilschlauch 1 nicht formstabil, sondern formlabil und somit quasi ohne im Wesentlichen eigene Steifheit ausgeführt ist.

Figur 4 zeigt eine schematische Querschnittsansicht eines eine Innenleitung 2 umhüllenden Textilschlauchs 1. Eine Besonderheit daran ist, dass zwischen dem Textilschlauch 1, insbesondere dessen Innenmantel 1.2, und der Innenleitung 2 Isoliermaterial 3 angeordnet ist, so dass der Bereich zwischen dem Innenmantel 1.2 und der Innenleitung 2 durch das Isoliermaterial 3 ausgefüllt ist.

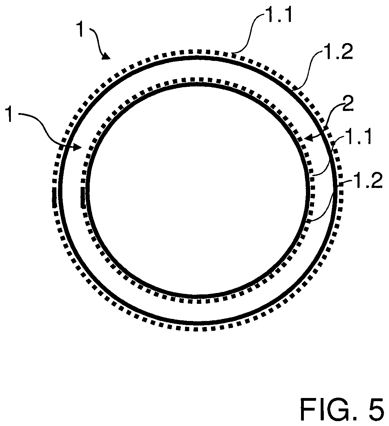

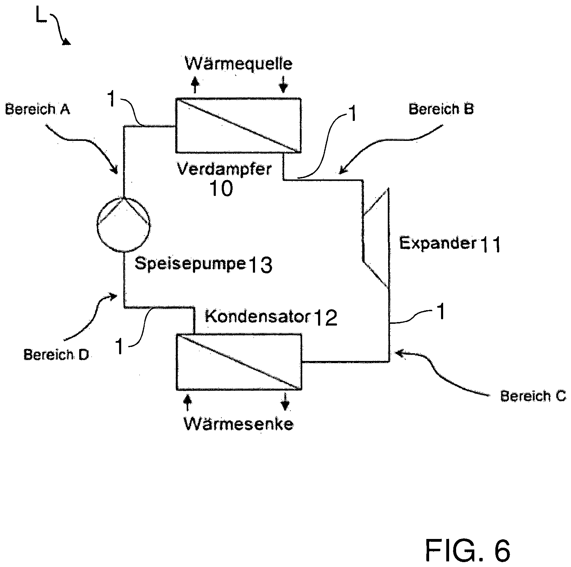

Figur 5 illustriert eine schematische Querschnittsansicht eines eine Innenleitung 2 umhüllenden Textilschlauchs 1. Eine Besonderheit ist, dass die Innenleitung 2 ebenfalls als Textilschlauch 1 mit Textilstruktur 1.1 und Innenmantel 1.2 ausgeführt ist. Die Leitung wird folglich durch zwei Textilschläuche 1 gebildet, wovon ein Textilschlauch 1 innerhalb eines anderen Textilschlauchs 1 verläuft, so dass vorzugsweise der äußere Textilschlauch 1 im Leckagefall des inneren Textilschlauchs 1 dafür sorgt, das Medium zurückzuhalten und/oder an einen vorbestimmten Ort zu führen. Figur 6 zeigt eine Leitungsanordnung L für ein Abwärmenutzungssystem zur Umwandlung von Abwärme einer Kraftfahrzeug-Verbrennungskraftmaschine in nutzbare Energie, zweckmäßig mittels eines Dampfkreislaufs.

Das Abwärmenutzungssystem umfasst einen Verdampfer 10, eine Expansionsmaschine (Expander) 11, einen Kondensator 12 und eine Fördereinrichtung 13, z. B. eine Speisepumpe, zum Fördern des fluiden Mediums.

Die in Figur 6 gezeigte Leitungsanordnung L kann zweckmäßig in die Bereiche A, B, C und D unterteilt werden.

Bereich A kennzeichnet einen Niedertemperatur/Hochdruckbereich (NT/HO) bzw. einen Bereich vom Austritt der Speisepumpe 13 bis zum Eintritt des Verdampfers 10. Üblich ist dort ein Betriebstemperaturniveau von 60°C bis 120°C und ein Betriebsdruckniveau von 10barabs bis 40barabs.

Es kann ein Leitungsaufbau gemäß Figur 2 oder 3 verwendet werden, vorzugsweise mit formstabiler Variante, oder gemäß Figur 5. Die Ausführungsform gemäß Figuren 2, 3 oder 5 bietet sich insbesondere dort an, wo eine Leckage aus sicherheitstechnischen Gründen vermieden werden muss. Durch den umhüllenden Textilschlauch 1 kann ein aus der Innenleitung 2 (z. B. Edelstrahlrohr, Hydraulikschlauch oder Textilschlauch 1) austretender Mediumstrahl zurückgehalten und an einen unkritischen Ort geführt werden. Beispielsweise kann so sichergestellt werden, dass im Falle einer Leckage kein entzündliches Medium an einen heißen Abgaskrümmer oder Turbolader trifft, sondern an einen kalten Bereich abgeleitet wird.

Eine Ausführungsform gemäß Figur 4 ist aufgrund der niedrigen Temperaturen nicht zweckmäßig, wobei der Leitungsaufbau gemäß Figur 1 an sich schon eine höhere isolierende Wirkung aufweist als etwa eine Edelstahlleitung.

Bereich B kennzeichnet einen Hochtemperatur/Hochdruckbereich (HT/HD) bzw. einen Bereich vom Austritt des Verdampfers 10 bis zum Eintritt der Expansionsmaschine 11. Üblich ist dort ein Betriebstemperaturniveau von 180°C bis 250°C und ein Betriebsdruckniveau von 10barabs bis 40barabs.

Es kann ein Leitungsaufbau gemäß Figur 4 verwendet werden, wobei aufgrund der hohen Temperaturen die Innenleitung 2 z. B. eine Edelstahlleitung sein kann. Der Textilschlauch 1 kann formstabil oder nicht formstabil ausgeführt sein. Aufgrund des umhüllenden Textilschlauches 1 bietet sich die Ausführungsform gemäß Figur 4 insbesondere dort an, wo eine Leckage des Mediums aus sicherheitstechnischen Gründen vermieden werden muss. Durch den umhüllenden Textilschlauch 1 kann ein aus der Innenleitung 2 in das Isoliermaterial 3 austretender Mediumdampf zurückgehalten und an einen unkritischen Ort geführt werden. Beispielsweise kann so sichergestellt werden, dass im Falle einer Leckage kein entzündlicher Mediumdampf an einen heißen Abgaskrümmer oder Turbolader trifft, sondern an einen kalten Bereich abgeleitet wird.

Ein Leitungsaufbau gemäß Figur 1, 2 oder 3 ist aufgrund der erforderlichen Isolierung nicht zweckmäßig.

Bereich C kennzeichnet einen Hochtemperatur/Niederdruckbereich (HT/ND) bzw. einen Bereich vom Austritt der Expansionsmaschine 11 bis zum Eintritt des Kondensators 12. Üblich ist dort ein Betriebstemperaturniveau von 120°C bis 250°C und ein Betriebsdruckniveau von 0,7barabs bis 5barabs.

Es kann eine Ausführungsform gemäß den Figuren 2 oder 3 verwendet werden. Der Leitungsaufbau gemäß den Figuren 2 oder 3 bietet sich insbesondere dort an, wo eine Leckage aus sicherheitstechnischen Gründen vermieden werden muss. Durch den umhüllenden Textilschlauch 1 kann ein aus der Innenleitung 2 austretender Mediumstrahl zurückgehalten und an einen unkritischen Ort geführt werden. Beispielsweise kann so sichergestellt werden, dass im Falle einer Leckage kein entzündliches Medium an einen heißen Abgaskrümmer oder Turbolader trifft, sondern an einen kalten Bereich abgeleitet wird.

Eine Ausführungsform gemäß Figur 4 ist aufgrund der im Bereich C gewünschten Wärmeabfuhr nicht zweckmäßig.

Bereich D kennzeichnet einen Niedertemperatur/Niederdruckbereich (NT/ND) bzw. einen Bereich vom Austritt des Kondensators 12 bis zum Eintritt der Speisepumpe 13. Üblich ist dort ein Betriebstemperaturniveau von 60°C bis 120°C und ein Betriebsdruckniveau von 0,7barabs bis 5 barabs.

Es ist eine Ausführungsform gemäß Figur 2 oder 3 möglich, wobei wiederum ein formstabiler Textilschlauch 1 möglich ist. Ferner ist eine Ausführungsform gemäß Figur 5 möglich. Die Ausführungsform gemäß Figur 2, 3 oder 5 bietet sich insbesondere dort an, wo eine Leckage aus sicherheitstechnischen Gründen vermieden werden muss. Durch den umhüllenden Textilschlauch 1 kann ein aus der Innenleitung 2 (z. B. Edelstrahlrohr, Hydraulikschlauch oder Textilschlauch 1) austretender Mediumstrahl zurückgehalten und an einen unkritischen Ort geführt werden. Beispielsweise kann so sichergestellt werden, dass im Falle einer Leckage kein entzündliches Medium an einen heißen Abgaskrummer oder Turbolader trifft, sondern an einen kalten Bereich abgeleitet wird.

Möglich ist auch ein Leitungsaufbau gemäß Figur 2, wobei ein nicht formstabiler und somit formlabiler Textilschlauch 1 verwendet werden kann. Üblicherweise entsteht beim Abkühlen des Mediums in der oder den Leitungen ein Unterdruck, durch den Medium aus einem Ausgleichsbehälter in die Leitungen nachfließt (Abstellvorgang). Bei der Ausführungsform als nicht formstabiler, zweckmäßig elastischer Textilschlauch 1 kann sich die Leitung zusammenziehen, wodurch der Ausgleichbehälter kleiner dimensioniert werden kann oder entfallen kann.

Ein Leitungsaufbau gemäß Figur 4 ist aufgrund der niedrigen Temperaturen nicht zweckmäßig, wobei die Ausführungsform als Textilschlauch 1 gemäß Figur 1 an sich schon eine höhere isolierende Wirkung aufweist als etwa eine Edelstahlleitung.

### Bezugszeichenliste

- 1: Textilschlauch
- 1.1: Textilstruktur
- 1.2: Innenmantel, insbesondere sogenannte Seele
- 2: Innenleitung, z. B. Edelstahlleitung, Hydraulikschlauch, oder Textilschlauch 1
- 3: Isoliermaterial
- 10: Verdampfer
- 11: Expansionsmaschine
- 12: Kondensator
- 13: Fördereinrichtung, z. B. Speisepumpe
- L: Leitungsanordnung

## Patentansprüche

1. Abwärmenutzungssystem mit einer Leitungsanordnung (L) für ein Kraftfahrzeug und zur Umwandlung von Abwärme einer Verbrennungskraftmaschine in nutzbare Energie, wobei die Leitungsanordnung (L) eine oder mehrere Leitungen zum Führen eines fluiden Mediums aufweist, **dadurch gekennzeichnet, dass** zumindest eine Leitung zumindest einen Textilschlauch (1) umfasst oder als zumindest ein Textilschlauch (1) ausgeführt ist und der Textilschlauch (1) eine Textilstruktur (1.1) und einen Innenmantel (1.2) aufweist, wobei der Textilschlauch (1) eine Innenleitung (2) umhüllt und die Innenleitung (2) zum Führen des fluiden Mediums dient, so dass der Textilschlauch (1) im Leckagefall der Innenleitung (2) dafür sorgt, das Medium zurückzuhalten und/oder an einen vorbestimmten Ort zu führen.

2. Abwärmenutzungssystem nach Anspruch 1, **dadurch gekennzeichnet, dass** die Textilstruktur (1.1) als Textilwebstruktur ausgeführt ist.

3. Abwärmenutzungssystem nach Anspruch 1 oder 2, **dadurch gekennzeichnet, dass** der Innenmantel (1.2) aus einem zweckmäßig mediumbeständigen und/oder dichten Elastomer ausgebildet ist.

4. Abwärmenutzungssystem nach einem der vorhergehenden Ansprüche, **dadurch gekennzeichnet, dass** die Textilstruktur (1.1) zur Aufnahme von Druckkräften des Mediums ausgeführt ist.

5. Abwärmenutzungssystem nach einem der vorhergehenden Ansprüche, **dadurch gekennzeichnet, dass** der Textilschlauch (1) formlabil ausgeführt ist.

6. Abwärmenutzungssystem nach einem der Ansprüche 1 bis 4, **dadurch gekennzeichnet, dass** der Textilschlauch (1) formstabil ausgeführt ist.

7. Abwärmenutzungssystem nach Anspruch 6, **dadurch gekennzeichnet, dass** der Textilschlauch (1) eine Spirale zur Formstabilitätserzielung aufweist und vorzugsweise die Spirale in den Textilschlauch (1) eingewebt ist.

8. Abwärmenutzungssystem nach einem der vorhergehenden Ansprüche, **dadurch gekennzeichnet, dass** die Innenleitung (2) durch zumindest eines von folgenden gebildet wird:
a) eine Edelstahlleitung,
b) einen Hydraulikschlauch,
c) einen Textilschlauch (1).

9. Abwärmenutzungssystem nach einem der vorhergehenden Ansprüche, **dadurch gekennzeichnet, dass** der Textilschlauch (1) mit einem Isolierungsmaterial (3) versehen ist.

10. Abwärmenutzungssystem nach einem der vorhergehenden Ansprüche, **dadurch gekennzeichnet, dass** zwischen dem Innenmantel (1.2) und der Innenleitung (2) Isoliermaterial (3) angeordnet ist.

11. Abwärmenutzungssystem nach einem der vorhergehenden Ansprüche, **dadurch gekennzeichnet, dass** zumindest ein Textilschlauch (1) zur fluiden Verbindung von zumindest einem von folgenden dient:
Verdampfer (10) und Expansionsmaschine (11)
Expansionsmaschine (11) und Kondensator (12)
Kondensator (12) und Fördereinrichtung (13) zum Fördern des fluiden Mediums
Fördereinrichtung (13) zum Fördern des fluiden Mediums und Verdampfer (14).

12. Abwärmenutzungssystem nach einem der vorhergehenden Ansprüche, **dadurch gekennzeichnet, dass** der Textilschlauch (1) eine Verbrennungskraftmaschine, einen Abgas-Krümmer und/oder einen Abgas-Turbolader kontaktiert oder zumindest benachbart daran vorbeigeführt ist.

13. Abwärmenutzungssystem nach einem der vorhergehenden Ansprüche, **dadurch gekennzeichnet, dass** das fluide Medium Dampf und/oder ein entzündliches Medium umfasst.

14. Abwärmenutzungssystem nach einem der vorhergehenden Ansprüche, **dadurch gekennzeichnet, dass** der Textilschlauch (1), vorzugsweise in seiner Längs- und Radialrichtung, elastisch ausgeführt ist.

15. Abwärmenutzungssystem nach einem der vorhergehenden Ansprüche, **dadurch gekennzeichnet, dass** der Textilschlauch (1) durch Unterdruck zusammenziehbar ist, wodurch zweckmäßig ein Ausgleichsbehälter kleiner dimensionierbar ist oder entfallen kann.

16. Abwärmenutzungssystem nach einem der vorhergehenden Ansprüche, **dadurch gekennzeichnet, dass** der Textilschlauch (1) bis zumindest 60°C, 80°C, 100°C, 120°C, 140°C, 160°C, 180°C, 200°C, 220°C oder 240°C temperaturbeständig ist und/oder bis zumindest 0,7bar, 1bar, 4bar, 8bar, 16bar, 32bar oder 48bar druckbeständig ist.

17. Abwärmenutzungssystem nach einem der vorhergehenden Ansprüche, **dadurch gekennzeichnet, dass** die Leitungsanordnung (L) zumindest zwei Textilschläuche (1) aufweist, wovon zumindest ein Textilschlauch (1) innerhalb eines anderen Textilschlauchs (1) verläuft, so dass vorzugsweise der äußere Textilschlauch (1) im Leckagefall des inneren Textilschlauchs (1) dafür sorgt, das Medium zurückzuhalten und/oder an einen vorbestimmten Ort zu führen.

18. Abwärmenutzungssystem nach einem der vorhergehenden Ansprüche, **dadurch gekennzeichnet, dass** die Umwandlung mittels eines Dampfkreislaufs erfolgt.

19. Kraftfahrzeug, mit einem Abwärmenutzungssystem nach einem der vorhergehenden Ansprüche.

## Claims

1. A waste heat utilization system having a line arrangement (L) for a motor vehicle and for converting waste heat of an internal combustion engine into utilizable energy, wherein the line arrangement (L) has one or more lines for conducting a fluid medium, **characterized in that** at least one line comprises at least one textile hose (1) or is configured as at least one textile hose (1), and the textile hose (1) has a textile structure (1.1) and an inner sheath (1.2), wherein the textile hose (1) encloses an inner line (2), and the inner line (2) serves to conduct the fluid medium, with the result that, in the case of a leak of the inner line (2), the textile hose (1) ensures that the medium is retained and/or conducted to a predefined location.

2. The waste heat utilization system according to Claim 1, **characterized in that** the textile structure (1.1) is configured as a woven textile structure.

3. The waste heat utilization system according to Claim 1 or 2, **characterized in that** the inner sheath (1.2) is configured from an expediently medium-resistant and/or medium-tight elastomer.

4. The waste heat utilization system according to one of the preceding claims, **characterized in that** the textile structure (1.1) is configured for absorbing pressure forces of the medium.

5. The waste heat utilization system according to one of the preceding claims, **characterized in that** the textile hose (1) is of dimensionally flexible configuration.

6. The waste heat utilization system according to one of Claims 1 to 4, **characterized in that** the textile hose (1) is of dimensionally stable configuration.

7. The waste heat utilization system according to Claim 6, **characterized in that** the textile hose (1) has a spiral for achieving the dimensional stability, and the spiral is preferably woven into the textile hose (1).

8. The waste heat utilization system according to one of the preceding claims, **characterized in that** the inner line (2) is formed by way of at least one of the following:
a) a stainless steel line,
b) a hydraulic hose,
c) a textile hose (1).

9. The waste heat utilization system according to one of the preceding claims, **characterized in that** the textile hose (1) is provided with an insulating material (3).

10. The waste heat utilization system according to one of the preceding claims, **characterized in that** insulating material (3) is arranged between the inner sheath (1.2) and the inner line (2).

11. The waste heat utilization system according to one of the preceding claims, **characterized in that** at least one textile hose (1) serves for the fluid connection of at least one of the following:
evaporator (10) and expansion machine (11)
expansion machine (11) and condenser (12)
condenser (12) and delivery device (13) for delivering the fluid medium
delivery device (13) for delivering the fluid medium and evaporator (14).

12. The waste heat utilization system according to one of the preceding claims, **characterized in that** the textile hose (1) makes contact with, or is at least conducted past in an adjoining manner, an internal combustion engine, an exhaust gas manifold and/or an exhaust gas turbocharger.

13. The waste heat utilization system according to one of the preceding claims, **characterized in that** the fluid medium comprises steam and/or a flammable medium.

14. The waste heat utilization system according to one of the preceding claims, **characterized in that** the textile hose (1) is of elastic configuration, preferably in its longitudinal and radial direction.

15. The waste heat utilization system according to one of the preceding claims, **characterized in that** the textile hose (1) can contract as a result of vacuum, as a result of which a compensating container can expediently be of smaller dimensions or can be dispensed with.

16. The waste heat utilization system according to one of the preceding claims, **characterized in that** the textile hose (1) is temperature-resistant up to at least 60°C, 80°C, 100°C, 120°C, 140°C, 160°C, 180°C, 200°C, 220°C or 240°C and/or is pressure-resistant up to at least 0.7 bar, 1 bar, 4 bar, 8 bar, 16 bar, 32 bar or 48 bar.

17. The waste heat utilization system according to one of the preceding claims, **characterized in that** the line arrangement (L) has at least two textile hoses (1), of which at least one textile hose (1) runs within another textile hose (1), with the result that, in the case of a leak of the inner textile hose (1), the outer textile hose (1) preferably ensures that the medium is retained and/or is conducted to a predefined location.

18. The waste heat utilization system according to one of the preceding claims, **characterized in that** the conversion takes place by means of a steam circuit.

19. A motor vehicle, having a waste heat utilization system according to one of the preceding claims.

## Revendications

1. Système d'utilisation de chaleur perdue avec un agencement de tuyaux (L) pour un véhicule automobile et pour la conversion de chaleur perdue d'un moteur à combustion interne en énergie utilisable, dans lequel l'agencement de tuyaux (L) présente un ou plusieurs tuyau(x) pour conduire un milieu fluide, **caractérisé en ce qu'**au moins un tuyau comprend au moins un flexible en textile (1) ou est réalisé sous forme d'au moins un flexible en textile (1) et le flexible en textile (1) présente une structure textile (1.1) et une enveloppe intérieure (1.2), dans lequel le flexible en textile (1) entoure un tuyau intérieur (2) et le tuyau intérieur (2) sert à transporter le milieu fluide, de telle manière que le flexible en textile (1) veille, en cas de fuite du tuyau intérieur (2), à retenir le milieu et/ou à le conduire à un endroit prédéterminé.

2. Système d'utilisation de chaleur perdue selon la revendication 1, **caractérisé en ce que** la structure textile (1.1) est réalisée sous forme de structure textile tissée.

3. Système d'utilisation de chaleur perdue selon la revendication 1 ou 2, **caractérisé en ce que** l'enveloppe intérieure (1.2) est formée d'un élastomère correctement résistant au milieu et/ou étanche.

4. Système d'utilisation de chaleur perdue selon l'une quelconque des revendications précédentes, **caractérisé en ce que** la structure textile (1.1) est réalisée en vue de reprendre des forces de pression du milieu.

5. Système d'utilisation de chaleur perdue selon l'une quelconque des revendications précédentes, **caractérisé en ce que** le flexible en textile (1) est réalisé sous forme souple.

6. Système d'utilisation de chaleur perdue selon l'une quelconque des revendications 1 à 4, **caractérisé en ce que** le flexible en textile (1) est réalisé sous forme stable.

7. Système d'utilisation de chaleur perdue selon la revendication 6, **caractérisé en ce que** le flexible en textile (1) présente une spirale pour obtenir une stabilité de forme et la spirale est de préférence tissée dans le flexible en textile (1).

8. Système d'utilisation de chaleur perdue selon l'une quelconque des revendications précédentes, **caractérisé en ce que** le tuyau intérieur (2) est formé par au moins une des conduites suivantes:
a) une conduite en acier allié,
b) un flexible hydraulique,
c) un flexible en textile (1).

9. Système d'utilisation de chaleur perdue selon l'une quelconque des revendications précédentes, **caractérisé en ce que** le flexible en textile (1) est muni d'un matériau isolant (3).

10. Système d'utilisation de chaleur perdue selon l'une quelconque des revendications précédentes, **caractérisé en ce qu'**un matériau isolant (3) est disposé entre l'enveloppe intérieure (1.2) et le tuyau intérieur (2).

11. Système d'utilisation de chaleur perdue selon l'une quelconque des revendications précédentes, **caractérisé en ce qu'**au moins un flexible en textile (1) sert pour le raccordement fluidique d'au moins un des éléments suivants:
évaporateur (10) et machine de détente (11)
machine de détente (11) et condenseur (12)
condenseur (12) et dispositif de transport (13) pour le transport du milieu fluide
dispositif de transport (13) pour le transport du milieu fluide et évaporateur (14).

12. Système d'utilisation de chaleur perdue selon l'une quelconque des revendications précédentes, **caractérisé en ce que** le flexible en textile (1) est en contact avec un moteur à combustion interne, un laveur de gaz d'échappement et/ou un turbocompresseur à gaz d'échappement ou est mené au moins à proximité de ceux-ci.

13. Système d'utilisation de chaleur perdue selon l'une quelconque des revendications précédentes, **caractérisé en ce que** le milieu fluide comprend de la vapeur et/ou un milieu inflammable.

14. Système d'utilisation de chaleur perdue selon l'une quelconque des revendications précédentes, **caractérisé en ce que** le flexible en textile (1) est élastique, de préférence dans sa direction longitudinale et radiale.

15. Système d'utilisation de chaleur perdue selon l'une quelconque des revendications précédentes, **caractérisé en ce que** le flexible en textile (1) peut être contracté par dépression, un réservoir d'équilibrage pouvant ainsi de manière appropriée être de plus petites dimensions ou être supprimé.

16. Système d'utilisation de chaleur perdue selon l'une quelconque des revendications précédentes, **caractérisé en ce que** le flexible en textile (1) est résistant à la température jusqu'au moins 60°C, 80°C, 100°C, 120°C, 140°C, 160°C, 180°C, 200°C, 220°C ou 240°C et/ou résistant à la pression jusqu'au moins 0,7 bar, 1 bar, 4 bar, 8 bar, 16 bar, 32 bar ou 48 bar.

17. Système d'utilisation de chaleur perdue selon l'une quelconque des revendications précédentes, **caractérisé en ce que** l'agencement de tuyaux (L) présente au moins deux flexibles en textile (1), dont au moins un flexible en textile (1) s'étend à l'intérieur de l'autre flexible en textile (1), de telle manière que de préférence le flexible en textile extérieur (1) veille, en cas de fuite du flexible en textile intérieur (1), à retenir le milieu et/ou à le conduire à un endroit prédéterminé.

18. Système d'utilisation de chaleur perdue selon l'une quelconque des revendications précédentes, **caractérisé en ce que** la conversion est effectuée au moyen d'un circuit de vapeur.

19. Véhicule automobile, avec un système d'utilisation de chaleur perdue selon l'une quelconque des revendications précédentes.
